# EUROPÄISCHE PATENTSCHRIFT

(11) **EP 2 207 249 B1**
(45) Veröffentlichungstag und Bekanntmachung des Hinweises auf die Patenterteilung: **22.07.2015**
(21) Anmeldenummer: 09177838.1
(22) Anmeldetag: 03.12.2009
(51) Int. Cl.: B25F 5/00

(54) **Steuerungsverfahren für einen Akkumulator und eine Handwerkzeugmaschine**
Control method for an accumulator and a hand tool machine
Procédé de commande pour un accumulateur et une machine-outil manuelle

(30) Priorität: 09.01.2009 DE 102009000102
(43) Veröffentlichungstag der Anmeldung: 14.07.2010
(73) Patentinhaber: HILTI Aktiengesellschaft, 9494 Schaan (LI)
(72) Erfinder: Brandner, Michael, 86807 Buchloe (DE); Müller, Thomas, 86836 Klosterlechfeld (DE); Schwab, Roland, 82269 Geltendorf (DE); Ziegler, Bernd, 86899 Landsberg (DE); Hauser, Klaus, 86830 Schwabmünchen (DE)
(74) Vertreter: Hilti Aktiengesellschaft Corporate Intellectual Property

(56) Entgegenhaltungen:
- JP-A- 2008 177 138
- US-A1- 2005 077 878
- US-A1- 2005 248 309
- US-A1- 2006 087 286

## Beschreibung

### GEBIET DER ERFINDUNG

Die vorliegende Erfindung betrifft ein Steuerungsverfahren für einen Akkumulator und eine Handwerkzeugmaschine und ein System aus einem Akkumulator und einer Handwerkzeugmaschine.

Eine Stromversorgung von Handwerkzeugmaschinen erfolgt zunehmend durch Akkumulatoren, z.B. Lithium-lonen Akkumulatoren. Die Leistungsaufnahme aus den Akkumulatoren muss gesteuert werden, um eine Beschädigung der Akkumulatoren z.B. wegen eines Tiefentladens zu vermeiden.
Systeme bestehend aus einem Akkumulator und einer Handwerkzeugmaschine sind aus dem Stand der Technik weitestgehend bekannt.
Beispielsweise offenbart die US-Patentanmeldung US 2006/0087286 A1 hierzu ein System bestehend aus einer akkubetriebenen Werkzeugmaschine, einem Akkumulator und einem Ladegerät für den Akkumulator. Das System verfügt über eine analoge Identifikations- und Kommunikationseinheit, über welches der Akkumulator sich identifiziert sowie Informationen zu der Werkzeugmaschine oder zu dem Ladegerät kommuniziert werden können.
Ein weiteres System bestehend aus einer Werkzeugmaschine und einem Akkumulator ist beispielsweise in der US-Patentanmeldung US 2005/0077878 A1 geneigt. Die Werkzeugmaschine sowie der Akkumulator stehen über eine Anzahl an Schnittstellen, über die Strom sowie Informationen gesendet werden können, zueinander in Verbindung.

Die Anforderungen und Belastungsprofile unterschiedlicher Handwerkzeugmaschinen an die Akkumulatoren unterscheiden sich sehr stark. Zudem unterscheiden sich die Anforderungen auch nach Anwendungsbereich.

### OFFENBARUNG DER ERFINDUNG

Eine Aufgabe besteht in der Bereitstellung eines Systems aus einer Handwerkzeugmaschine und eines Akkumulators, bei dem eine optimale Auslastung eines Akkumulators möglich ist, der für verschiedene Handwerkzeugmaschinen einsetzbar ist.

Diese Aufgabe wird durch die erfindungsgemässen Steuerungsverfahren und das System aus Handwerkzeugmaschine und Akkumulator gelöst.

Das erfindungsgemässe Steuerungsverfahren für einen Akkumulator, der eine Schnittstelle zum Kommunizieren mit einer Handwerkzeugmaschine und zum Versorgen der Handwerkzeugmaschine aufweist, sieht vor, dass der Akkumulator charakterisierende Angaben der Handwerkzeugmaschine und/oder Angaben über einen Betriebsverlauf der Handwerkzeugmaschine über die Schnittstelle empfängt, wobei charakterisierende Angaben der Handwerkzeugmaschine über die Schnittstelle empfangen werden, wobei die charakterisierenden Angaben der Handwerkzeugmaschine, Angaben über eine maximal zulässige Dauer, für die eine Grenzspannung des Akkumulators unterschritten werden darf, umfassen und falls ein Tiefentladeschutz des Akkumulators ermittelt, dass die Grenzspannung länger als die maximal zulässige Dauer unterschritten wird, wird ein Warnsignal über die Schnittstelle ausgegeben und/oder eine Stromversorgung über die Schnittstelle wird seitens des Akkumulators unterbrochen.

Das erfindungsgemässe Steuerungsverfahren für eine Handwerkzeugmaschine, die eine Schnittstelle zum Kommunizieren mit einem Akkumulator und zum Versorgen über den Akkumulator aufweist, sieht vor, dass die Handwerkzeugmaschine charakterisierende Angaben und/oder Angaben über einen Betriebsverlauf der Handwerkzeugmaschine über die Schnittstelle ausgibt, wobei charakterisierende Angaben der Handwerkzeugmaschine über die Schnittstelle ausgegeben werden, wobei die charakterisierenden Angaben der Handwerkzeugmaschine Angaben über eine maximal zulässige Dauer, für die eine Grenzspannung des Akkumulators unterschritten werden darf, umfassen und falls ein Warnsignal eines Tiefentladeschutzes des Akkumulators, dass die Grenzspannung länger als die maximal zulässige Dauer unterschritten wird, über die Schnittstelle empfangen wird, wird ein Motor der Handwerkzeugmaschine abgeschaltet.

Das erfindungsgemässe Steuerungsverfahren für ein System aus einer Handwerkzeugmaschine und einem Akkumulator, wobei die Handwerkzeugmaschine über eine Stromschnittstelle mit dem Akkumulator zum Versorgen der Handwerkzeugmaschine verbindbar ist, und die Handwerkzeugmaschine eine Datenschnittstelle zum Kommunizieren mit dem Akkumulator aufweist, sieht vor, dass die Handwerkzeugmaschine charakterisierende Angaben an den Akkumulator und/oder Angaben über einen Betriebsverlauf der Handwerkzeugmaschine überträgt, wobei charakterisierende Angaben der Handwerkzeugmaschine über die Schnittstelle ausgegeben werden, wobei die charakterisierenden Angaben der Handwerkzeugmaschine Angaben über eine maximal zulässige Dauer, für die eine Grenzspannung des Akkumulators unterschritten werden darf, umfassen und falls ein Warnsignal eines Tiefentladeschutzes des Akkumulators, dass die Grenzspannung länger als die maximal zulässige Dauer unterschritten wird, über die Schnittstelle empfangen wird, wird ein Motor der Handwerkzeugmaschine abgeschaltet.

Die Handwerkzeugmaschine informiert den Akkumulator über das typische Anwendungsprofil. Hierdurch kann der Akkumulator seine Abschaltung optimieren. Strenge Abschaltkriterien, die alle möglichen Anwendungsgebiete eines Akkumulators abdecken, können aufgehoben oder an die Anwendung bzw. die Handwerkzeugmaschine angepasst werden.

Die charakterisierenden Angaben können ein Lastprofil der Handwerkzeugmaschine umfassen, z.B. charakterisierende Angaben über eine Grenzspannung des Akkumulators und/oder maximal zulässige Dauer, für die eine Grenzspannung des Akkumulators unterschritten werden darf. Die charakterisierenden Angaben können aus einem Permanentspeicher der Handwerkzeugmaschine ausgelesen werden.

Eine Aufzeichnungseinrichtung der Handwerkzeugmaschine kann einen Betrieb der Handwerkzeugmaschine protokollieren und die protokollierten Daten an den Akkumulator zum Abspeichern in dem Akkumulator übermittelten. Die protokollierten Daten können beispielsweise übertragen werden, wenn der Systemschalter länger als eine vorgegebene Zeitspanne unbetätigt ist.

Ein Akkumulator, eine Handwerkzeugmaschine und das System aus Akkumulator und Handwerkzeugmaschine sind zum Ausführen der beschriebenen Verfahren eingerichtet.

### KURZE BESCHREIBUNG DER FIGUREN

Die nachfolgende Beschreibung erläutert die Erfindung anhand von exemplarischen Ausführungsformen und Figuren. In den Figuren zeigen:

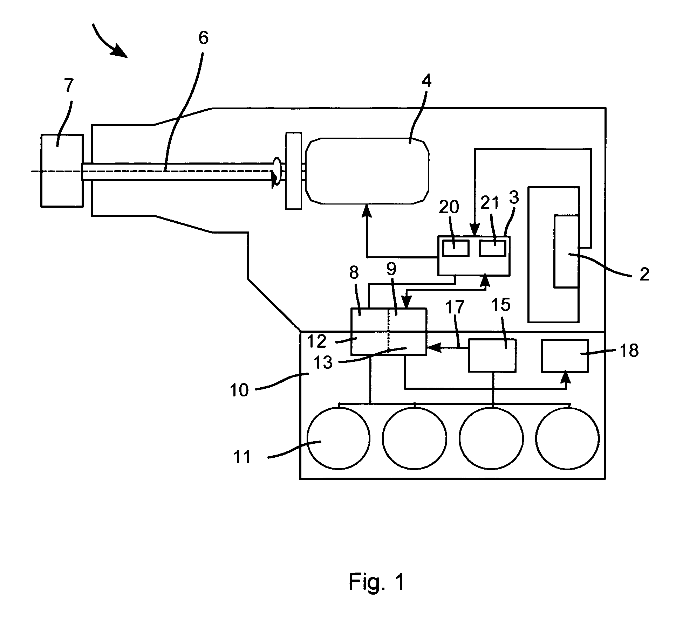

Fig. 1 eine Handwerkzeugmaschine mit Akkumulator.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

Fig. 1 zeigt einen batteriegetriebenen Standardschrauber 1, als Beispiel für Handwerkzeugmaschinen. Ein Anwender kann einen Systemschalter 2 betätigen, worauf eine Systemsteuerung 3 aktiviert wird. Die Systemsteuerung 3 schaltet einen Motor 4 an, der einen Antriebsstrang 6 und eine Werkzeugaufnahme 7 z.B. für eine Nuss oder ein Bit dreht. Die Systemsteuerung 3 stoppt den Motor 4, wenn der Anwender den Systemschalter 2 loslässt. Die Dauer für die der Motor 4 eingeschaltet ist, wird nachfolgend als aktive Phase des Schraubers 1 bezeichnet. Die aktive Phase kann von dem Anwendungsgebiet des Standardschraubers 1 abhängen. Bei einer typischen Anwendung ist die aktive Phase beispielsweise 2 s bis 6 s lang.

Eine Stromversorgung der Handwerkzeugmaschinen 1 erfolgt über einen ladbaren Akkumulator 10. In der Handwerkzeugmaschine 1 und dem Akkumulator 10 sind zueinander entsprechende Stromschnittstellen 8, 12 vorgesehen. Der Akkumulator 10 kann beispielsweise ein Lithium-lonen Akkumulator mit einer Mehrzahl von Zellen 11 sein.

Der Akkumulator 10 weist eine elektrische Kapazität und einen Ladezustand auf. In einer aktiven Phase entlädt die Handwerkzeugmaschine 1 den Akkumulator 10. Der Akkumulator 10 darf nicht unter einen minimalen Ladezustand entladen werden, da dies zu einer dauerhaften Beschädigung des Akkumulators führen könnte. Ein weiteres Entladen wird als Tiefentladen bezeichnet. Der Akkumulator 10 signalisiert über eine Datenschnittstelle 9, 13 an die Handwerkzeugmaschine 1 ein Warnsignal 17, falls ein Tiefentladeschutz 15 des Akkumulators 10 ein Tiefentladen ermittelt. Die Handwerkzeugmaschine 1 beendet ansprechend auf das Warnsignal 17 vorzeitig die aktive Phase und schaltet den Motor 4 ab. Das Warnsignal 17 kann als eindeutig identifizierbares Signal an die Handwerkzeugmaschine 1 übermittelt werden. Alternativ können Fehler- und Warnmeldungen des Akkumulators 10 zu einem Statussignal, ggf. einer einzelnen Informationseinheit" zusammengefasst werden. Weitere Warnmeldungen können sich beispielsweise auf ein Überschreiten einer zulässigen Betriebstemperatur des Akkumulators 10 beziehen.

Erste Anzeichen für ein Tiefentladen ist ein Abfall einer Klemmenspannung des Akkumulators 10 unter eine Grenzspannung des Akkumulators 10. Unter Belastung kann die Klemmenspannung unter die Grenzspannung abfallen. Allerdings kann die Klemmenspannung wieder ansteigen und damit einen Wert über der Grenzspannung erreichen, wenn der Akkumulator nicht belastet wird. Ein Tiefentladen kann daher anhand der Klemmenspannung nur zuverlässig unter Belastung, d.h. während der aktiven Phase, erkannt werden.

Das Unterschreiten der Grenzspannung kann jedoch anstatt eines Tiefentladens auch aufgrund einer kurzzeitigen Spitzenbelastung erfolgen. Sobald die Belastung von der Spitzenbelastung auf ein mittleres Niveau abfällt, steigt die Klemmenspannung auch bei fortgesetzter mittlerer Belastung wieder über die Grenzspannung an. Ein kurzzeitiges Unterschreiten der Grenzspannung ist somit kein Anzeichen eines schädlichen Tiefentladens sondern nur Anzeichen einer hohen mechanischen Last der Handwerkzeugmaschine 1.

Bei dem Standardschrauber können Spitzenlasten auftreten, z.B. beim Lösen einer festsitzenden Schraube. Diese können zum Beispiel 1 s bis 2 s andauern. Bei einer solchen Belastung kann die Klemmenspannung des Akkumulators 10, ohne tiefentladen zu sein, für eine Dauer von 1 s bis 2 s unter die Grenzspannung abfallen. Ein Abschalten des Standardschraubers ist dabei nicht erwünscht. Daher ist vorgesehen, dass für die typische Dauer von 1 s bis 2 s bei einem an den Standardschrauber angeschlossenen Akkumulator die Klemmenspannung unter die Grenzspannung fallen darf, ohne dass ein Tiefentladen an die Werkzeugmaschine 1 signalisiert wird.

Das Unterschreiten der Grenzspannung kann jedoch nicht generell für 1 s bis 2 s toleriert werden. Trockenbauschrauber dienen hierzu als Beispiel. Trockenbauschrauber sind speziell an die Anforderungen im Trockenbau angepasste Schrauber, u.A. können die Trockenbauschrauber mit Magazinen zum Zuführen von Schrauben ausgerüstet werden. Ihre Leistungsaufnahme und Lastprofile können sich von denen der Standardschrauber unterscheiden. Die Setzdauer für eine Schraube im Trockenbau, d.h. die aktive Phase, beträgt typisch im Mittel zwischen 0,2 s und 1 s, z.B. 0,5 s. Die aktive Phase ist folglich zu kurz, als dass ein Unterschreiten der Grenzspannung von 1 s bis 2 s erfolgen könnte. Es ist daher vorgesehen, dass ein Trockenbauschrauber die zulässige Dauer eines Unterschreitens der Grenzspannung auf einen anderen Wert festlegt, der kürzer als seine aktive Phase ist, z.B. auf 80% bis 90% der typischen aktiven Phase.

Die Handwerkzeugmaschine 1 weist einen Speicher 20 auf, in dem die zulässige Dauer T abgespeichert ist, für die die Grenzspannung unterschritten werden darf. Die zulässige Dauer kann von dem Typ oder dem Einsatzgebiet der Handwerkzeugmaschine 1 abhängig vorgegeben sein. Der Speicher kann ein Permanentspeicher sein, wobei die zulässige Dauer bei der Herstellung der Handwerkzeugmaschine 1 festgelegt wird. Die maximal zulässige Dauer T kann in Abhängigkeit der erwarteten mittleren Dauer ihrer aktiven Phasen definiert werden. Zum Beispiel kann die maximal zulässige Dauer T zwischen 50% und 90% der aktiven Phase betragen. Für Handwerkzeugmaschinen 1, die eine vergleichsweise lange aktive Phase aufweist, z.B. Handkreissägen: 1 min bis 2 min, kann alternativ oder zusätzlich eine Obergrenze der maximal zulässigen Dauer T auf 2 s bis 5 s festgelegt werden.

Das Überwachen eines Tiefentladens kann durch den Tiefentladeschutz 15 in dem Akkumulator 10 erfolgen. Die Grenzspannung kann für den gesamten Akkumulator 10 oder für jede einzelne seiner Zellen 11 vorgegeben sein und überwacht werden. Alternativ oder zusätzlich kann das Überwachen eines Tiefentladens durch einen Tiefentladeschutz in der Systemsteuerung 3 erfolgen.

Der Tiefentladeschutz 15 wird getriggert, wenn eine Klemmenspannung des Akkumulators 10 unter die Grenzspannung fällt. Der Tiefentladeschutz 15 wartet eine erste Zeitspanne T ab. Bleibt die Klemmenspannung für die Dauer der ersten Zeitspanne T unterhalb der Grenzspannung, wird der Akkumulator 10 von der Handwerkzeugmaschine 1 getrennt. In einer Ausführung übermittelt der Tiefentladeschutz ein Warnsignal über die Datenschnittstelle an die Handwerkzeugmaschine. Eine Steuereinrichtung der Handwerkzeugmaschine deaktiviert ansprechend auf das Warnsignal die Stromschnittstelle und/oder schaltet den Motor 4 ab. Alternativ oder zusätzlich kann der Akkumulator 10 die Stromschnittstelle 12 deaktivieren.

Falls die Klemmenspannung innerhalb der ersten Zeitspanne T wieder über die Grenzspannung ansteigt, wird der Tiefentladeschutz 15 deaktiviert. Die erste Zeitspanne T gibt somit eine Dauer vor, für die ein Unterschreiten der Grenzspannung zulässig ist, d.h. kein Abschalten des Akkumulators 10 oder des Motors 4 erfolgt.

Die erste Zeitspanne T oder die maximal zulässige Dauer wird von der Handwerkzeugmaschine 1 an den Akkumulator 10 bei jeder Inbetriebnahme übermittelt. Die maximal zulässige Dauer T kann in der Handwerkzeugmaschine 1 in dem Speicher 20 abgespeichert sein. Für die Übertragung der maximal zulässigen Dauer T ist eine Datenschnittstelle 13 in der Handwerkzeugmaschine 1 und eine entsprechende Datenschnittstelle 9 in dem Akkumulator 10 vorgesehen.

Die Handwerkzeugmaschine 1 kann zusätzlich Kenndaten einer typischen Belastung über die Datenschnittstelle 9 an den Akkumulator 10 übermitteln. Die Kenndaten umfassen beispielsweise die Leistungsaufnahme während einer aktiven Phase T oder Spitzenlasten, die während einer aktiven Phase auftreten. Die mittleren Kenndaten können in dem Speicher 20 der Handwerkzeugmaschine 1 abgespeichert sein. Beispielsweise kann ein Spannungsabfall hinterlegt sein, der im typischen Betrieb bei geladenen Akkumulatoren 10 auftritt. Der Tiefentladeschutz 15 kann bei einem Spannungsabfall prüfen, ob dieser Spannungsabfall grösser als der von der Handwerkzeugmaschine 1 übermittelte Spannungsabfall ist. Dies wäre ein Anzeichen für ein Tiefentladen. In dem Fall wird der Motor 4 abgeschaltet und/oder die Stromschnittstelle 12 deaktiviert und der Akkumulator 10 von der Handwerkzeugmaschine 1 elektrisch getrennt.

Die Handwerkzeugmaschine 1 kann eine Aufzeichnungseinrichtung 21 aufweisen. Die Aufzeichnungseinrichtung 21 zählt die Anzahl von aktiven Phasen während eines Betriebszyklus. Ein Betriebszyklus kann beendet sein, wenn der Anwender den Systemschalter 2 loslässt. Alternativ kann der Betriebszyklus fortgeführt werden, wenn der Anwender innerhalb einer vorgegebenen Zeitspanne den Systemschalter 2 wieder betätigt.

Die Aufzeichnungseinrichtung 21 kann die Betriebsdauer und/oder Daten zur Leistungsaufnahme aus dem Akkumulator 10 flüchtig und/oder nichtflüchtig aufzeichnen. Die Handwerkzeugmaschine 1 kann ferner festhalten, weshalb aktive Phasen beendet wurden. Insbesondere können Daten über die Häufigkeit eines Abschaltens aufgrund von Fehler- und Warnmeldungen festgehalten werden. Die Fehler- und Warnmeldungen umfassen beispielsweise die Warnmeldungen 17 seitens des Akkumulators 10, Meldungen eines sekundären Tiefentladeschutzes in der Handwerkzeugmaschine 1, oder eines Überlastschutzes. In dem Akkumulator 10 kann ein nicht-flüchtiger Datenspeicher 18 vorgesehen sein, in dem die seitens der Handwerkzeugmaschine 1 gesammelten Daten gespeichert werden können. Nach einem Betriebszyklus und/oder einer aktiven Phase überträgt die Handwerkzeugmaschine 1 die Daten über die Datenschnittstelle 9 an den Akkumulator 10 zum Abspeichern.

Die Handwerkzeugmaschine 1 kann einen elektrischen Puffer aufweisen, der einen Betrieb der Datenschnittstelle 9 gewährleistet, wenn der Akkumulator 10 die Stromversorgung über die Stromschnittstelle 12 unterbricht. Alternativ kann eine zweite Stromschnittstelle vorgesehen sein, die der Akkumulator 10 zeitversetzt nach dem Abschalten der ersten Stromschnittstelle abschaltet. Die zweite Stromschnittstelle erlaubt nur eine vergleichsweise geringe Leistungsaufnahme und ist zwar nicht zum Betrieb des Antriebs der Handwerkzeugmaschine 1 aber für den Betrieb der Datenschnittstelle 9 ausgelegt.

Nachfolgend wird ein beispielhafter Betrieb eines Systems aus Handwerkzeugmaschine 1 und Akkumulator 10 beschrieben. Nachdem ein Anwender den Systemschalter 2 betätigt, werden von der Handwerkzeugmaschine 1 die maximal zulässige Dauer T und ggf. weitere Kenndaten der Handwerkzeugmaschine 1 an den Akkumulator 10 übermittelt. Die Kenndaten werden dazu aus dem Speicher 20 ausgelesen. Danach kann der Antriebsstrang und der Motor 4 aktiviert werden. Vorzugsweise wird ein paralleler Betrieb des Antriebs und der Datenschnittstelle 9 vermieden, um eine störungsfreie Datenübertragung zu gewährleisten. Der Motor 4 ist für eine aktive Phase in Betrieb.

Der Akkumulator 10 kann die übermittelte maximal zulässige Dauer T und die weiteren Kenndaten überprüfen. Falls diese Dauer und die Kenndaten vorgegebene Maximalwerte des Akkumulators 10 überschreiten, werden die Werte entsprechend begrenzt. Der Tiefentladeschutz 15 des Akkumulators 10 wird entsprechend den übermittelten und ggf. begrenzten Werten eingerichtet. Während einer Leistungsabgabe des Akkumulators 10 an die Handwerkzeugmaschine 1 überwacht der Tiefentladeschutz 15, wie obig beschrieben, die Klemmenspannung und/oder die Einzelzellenspannungen. Falls die Grenzspannung länger als die zulässige Dauer T unterschritten wird, sendet der Akkumulator 10 das Warnsignal 17 und/oder trennt die Stromversorgung.

Falls der Anwender den Systemschalter 2 nach einer aktiven Phase weiter gedrückt hält oder innerhalb einer Zeitspanne T1 den Systemschalter 2 erneut betätigt, d.h. innerhalb eines Betriebszyklus, erfolgt in einer Ausgestaltung keine weitere Kommunikation zwischen der Handwerkzeugmaschine 1 und dem Akkumulator 10. Falls die Zeitspanne T1 überschritten wird, kann die Handwerkzeugmaschine 1 die maximal zulässige Dauer und ggf. die weiteren Kenndaten erneut übermitteln.

Während des Betriebszyklus ermittelt die Aufzeichnungseinrichtung 21 beispielsweise die Leistungsaufnahme, die Anzahl der aktiven Phasen und die Betriebsdauer. Sobald ein Betriebszyklus abgeschlossen ist, d.h. der Systemschalter 2 für die Zeitspanne T1 nicht betätigt wurde, werden die Daten an den Akkumulator 10 zum Abspeichern übermittelt.

Falls eine Warnmeldung 17 während einer aktiven Phase auftritt, wird der Motor 4 abgeschaltet. Die Aufzeichnungseinrichtung 21 registriert die Warnmeldung in einem Zählregister. Der Zählerstand kann bei beenden des Betriebszyklus oder unmittelbar nach Auftreten der Warnmeldung an den Akkumulator zum Abspeichern übermittelt werden.

## Patentansprüche

1. Steuerungsverfahren für einen Akkumulator (10), der eine Schnittstelle (12, 13) zum Kommunizieren mit einer Handwerkzeugmaschine (1) und zum Versorgen der Handwerkzeugmaschine aufweist, wobei charakterisierende Angaben der Handwerkzeugmaschine und/oder Angaben über einen Betriebsverlauf der Handwerkzeugmaschine über die Schnittstelle empfangen werden, **dadurch gekennzeichnet, dass** charakterisierende Angaben der Handwerkzeugmaschine (1) über die Schnittstelle empfangen werden, wobei die charakterisierenden Angaben der Handwerkzeugmaschine (1), Angaben über eine maximal zulässige Dauer, für die eine Grenzspannung des Akkumulators unterschritten werden darf, umfassen und falls ein Tiefentladeschutz (15) des Akkumulators ermittelt, dass die Grenzspannung länger als die maximal zulässige Dauer unterschritten wird, wird ein Warnsignal über die Schnittstelle (13) ausgegeben und/oder eine Stromversorgung über die Schnittstelle (12) wird seitens des Akkumulators (10) unterbrochen.

2. Steuerungsverfahren nach Anspruch 1, **dadurch gekennzeichnet, dass** die charakterisierenden Angaben der Handwerkzeugmaschine (1) über ein Lastprofil der Handwerkzeugmaschine (1) umfassen.

3. Steuerungsverfahren für eine Handwerkzeugmaschine (1), die eine Schnittstelle (9) zum Kommunizieren mit einem Akkumulator (10) und zum Versorgen aus dem Akkumulator aufweist, wobei charakterisierende Angaben der Handwerkzeugmaschine und/oder Angaben über einen Betriebsverlauf der Handwerkzeugmaschine über die Schnittstelle ausgegeben werden, **dadurch gekennzeichnet, dass** charakterisierende Angaben der Handwerkzeugmaschine (1) über die Schnittstelle ausgegeben werden, wobei die charakterisierenden Angaben der Handwerkzeugmaschine (1) Angaben über eine maximal zulässige Dauer, für die eine Grenzspannung des Akkumulators unterschritten werden darf, umfassen und falls ein Warnsignal (17) eines Tiefentladeschutzes (15) des Akkumulators (10), dass die Grenzspannung länger als die maximal zulässige Dauer unterschritten wird, über die Schnittstelle (9) empfangen wird, wird ein Motor (4) der Handwerkzeugmaschine (1) abgeschaltet.

4. Steuerungsverfahren nach Anspruch 3, **dadurch gekennzeichnet, dass** die charakterisierenden Angaben aus einem Permanentspeicher (20) der Handwerkzeugmaschine (1) ausgelesen werden.

5. Steuerungsverfahren nach Anspruch 3 und 4, **dadurch gekennzeichnet, dass** die charakteristischen Angaben ausgegeben werden, wenn ein Systemschalter (2) der Handwerkzeugmaschine (1) länger als eine vorgegebene Zeitspanne (T1) unbetätigt ist.

6. Steuerungsverfahren nach einem der Ansprüche 3 bis 5, **dadurch gekennzeichnet, dass** während eines Obertragens der charakteristischen Angaben, ein Motor (4) der Handwerkzeugmaschine (1) deaktiviert wird.

7. Steuerungsverfahren nach einem der Ansprüche 3 bis 6, **dadurch gekennzeichnet, dass** die charakteristischen Angaben eine Vorgabe für die Grenzspannung enthalten.

8. Steuerungsverfahren nach einem der Ansprüche 3 bis 7, **dadurch gekennzeichnet, dass** eine Aufzeichnungseinrichtung (21) der Handwerkzeugmaschine (1) einen Betrieb der Handwerkzeugmaschine (1) protokolliert und die protokollierten Daten an den Akkumulator (10) zum Abspeichern in dem Akkumulator (10) übermittelt.

9. Steuerungsverfahren nach Anspruch 8, **dadurch gekennzeichnet, dass** die protokollierten Daten übertragen werden, wenn der Systemschalter (2) länger als eine vorgegebene Zeitspanne (T1) unbetätigt ist.

10. Steuerungsverfahren für ein System aus einer Handwerkzeugmaschine (1) und einem Akkumulator (10), wobei die Handwerkzeugmaschine über eine Stromschnittstelle (8) mit dem Akkumulator zum Versorgen der Handwerkzeugmaschine verbindbar ist, und die Handwerkzeugmaschine eine Datenschnittstelle (9) zum Kommunizieren mit dem Akkumulator aufweist, wobei charakterisierende Angaben der Handwerkzeugmaschine an den Akkumulator und/oder Angaben über einen Betriebsverlauf der Handwerkzeugmaschine übertragen werden, **dadurch gekennzeichnet, dass** charakterisierende Angaben der Handwerkzeugmaschine (1) über die Schnittstelle ausgegeben werden, wobei die charakterisierenden Angaben der Handwerkzeugmaschine (1) Angaben über eine maximal zulässige Dauer, für die eine Grenzspannung des Akkumulators unterschritten werden darf, umfassen und falls ein Warnsignal (17) eines Tiefentladeschutzes (15) des Akkumulators (10), dass die Grenzspannung länger als die maximal zulässige Dauer unterschritten wird, über die Schnittstelle empfangen wird, wird ein Motor (4) der Handwerkzeugmaschine (1) abgeschaltet.

11. Steuerungsverfahren nach Anspruch 10, **dadurch gekennzeichnet, dass** der Akkumulator (10) ein Steuerungsverfahren nach einem der Ansprüche 1 bis 2 und die Handwerkzeugmaschine (1) ein Steuerungsverfahren nach einem der Anspruche 3 bis 10 ausführt.

12. Akkumulator (10) für eine Handwerkzeugmaschine (1), der eine Schnittstelle zum Kommunizieren mit der Handwerkzeugmaschine (1) und zum Versorgen der Handwerkzeugmaschine (1) aufweist, **gekennzeichnet durch** einen Tiefentladeschutz (15) zum Überwachen eines Tiefentladens ansprechend auf von der Handwerkzeugmaschine (1) übertragene charakteristische Daten der Handwerkzeugmaschine (1) und/oder einen Datenspeicher (18) zum Speichern von Angaben über einen Betriebsverlauf der Handwerkzeugmaschine, die von der Handwerkzeugmaschine übertragen werden, **dadurch** gekennzeichnet, dass charakterisierende Angaben der Handwerkzeugmaschine (1) über die Schnittstelle empfangen werden, wobei die charakterisierenden Angaben der Handwerkzeugmaschine (1) Angaben über eine maximal zulässige Dauer, für die eine Grenzspannung des Akkumulators unterschritten werden darf, umfassen und falls ein Tiefentladeschut (15) des Akkumulators (10) ermittelt, dass die Grenzspannung länger als die maximal zulässige Dauer unterschritten wird, wird ein Warnsignal über die Schnittstelle (13) ausgegeben und/oder eine Stromversorgung über die Schnittstelle (12) wird seitens des Akkumulators (10) unterbrochen.

13. System aus einer Handwerkzeugmaschine und einem Akkumulator, **gekennzeichnet durch** eine Schnittstelle zum Kommunizieren mit der Handwerkzeugmaschine (1) und zum Versorgen der Handwerkzeugmaschine **durch** den Akkumulator (10), derart konfiguriert ist, dass das System ein Verfahren nach einem der Ansprüche 10 oder 11 ausführt.

## Claims

1. Control method for a battery (10) comprising an interface (12, 13) for communicating with a hand-held power tool (1) and for supplying the hand-held power tool, wherein characterising data of the hand-held power tool and/or data about the operating behaviour of the hand-held power tool are received via the interface, **characterised in that** characterising data about the maximum permissible duration for which the voltage of the battery and/or the voltage of individual cells of the battery may fall below a limit value are received via the interface and if a total discharge protection system (15) of the battery determines that the voltage has fallen below the limit value for longer than the maximum permissible duration, a warning signal is output via the interface (13) and/or the power supply via the interface (12) is interrupted on the part of the battery (10).

2. Control method according to claim 1, **characterised in that** the characterising data include a load profile of the hand-held power tool (1).

3. Control method for a hand-held power tool (1) comprising an interface (9) for communicating with a battery (10) and for supplying from the battery, wherein characterising data of the hand-held power tool and/or data about the operating behaviour of the hand-held power tool are output via the interface, **characterised in that** characterising data about the maximum permissible duration for which the voltage of the battery may fall below a limit value are output via the interface and if a warning signal (17) from a total discharge protection system (15) that the voltage has fallen below the limit value for longer than the maximum permissible duration is received via the interface (9), a motor (4) of the hand-held power tool (1) is switched off.

4. Control method according to claim 3, **characterised in that** the characterising data are read out of a permanent memory (20) of the hand-held power tool (1).

5. Control method according to claims 3 and 4, **characterised in that** the characteristic data are output if a system switch (2) of the hand-held power tool (1) remains unactuated for longer than a predetermined period of time (T1).

6. Control method according to one of claims 3 to 5, **characterised in that** a motor (4) of the hand-held power tool (1) is deactivated during the transmission of the characteristic data.

7. Control method according to one of claims 3 to 6, **characterised in that** the characteristic data contain a default value for the voltage limit.

8. Control method according to one of claims 3 to 7, **characterised in that** a recording device (21) of the hand-held power tool (1) logs the operation of the hand-held power tool (1) and transfers the logged data to the battery (10) for storage in the battery (10).

9. Control method according to claim 8, **characterised in that** the logged data are transmitted if the system switch (2) remains unactuated for longer than a predetermined period of time (T1).

10. Control method for a system consisting of a hand-held power tool (1) and a battery (10), wherein the hand-held power tool can be connected to the battery via a current interface (8) for supplying the hand-held power tool and the hand-held power tool comprises a data interface (9) for communicating with the battery, characterising data of the hand-held power tool being transmitted to the battery and/or data about the operating behaviour of the hand-held power tool being transmitted, **characterised in that** characterising data about the maximum permissible duration for which the voltage of the battery may fall below a limit value are output via the interface and if a warning signal (17) from a total discharge protection system (15) that the voltage has fallen below the limit value for longer than the maximum permissible duration is received via the interface, a motor (4) of the hand-held power tool (1) is switched off.

11. Control method according to claim 10, **characterised in that** the battery (10) executes a control method according to one of claims 1 to 3 and the hand-held power tool (1) executes a control method according to one of claims 3 to 9.

12. Battery for a hand-held power tool, comprising an interface for communicating with the hand-held power tool (1) and for supplying the hand-held power tool, **characterised by** a total discharge protection system (15) for monitoring total discharge in response to characteristic data of the hand-held power tool (1) transmitted by the hand-held power tool (1) and/or a data memory (18) for storing data about the operating behaviour of the hand-held power tool transmitted by the hand-held power tool, **characterised in that** characterising data about the maximum permissible duration for which the voltage of the battery may fall below a limit value are output via the interface and if a warning signal (17) from a total discharge protection system (15) that the voltage has fallen below the limit value for longer than the maximum permissible duration is received via the interface, a motor (4) of the hand-held power tool (1) is switched off.

13. System consisting of a hand-held power tool and a battery, **characterised by** an interface for communicating with the hand-held power tool (1) and for supplying the hand-held power tool by the battery (10), adapted to execute one of the methods according to claim 10 or claim 11.

## Revendications

1. Procédé de commande pour un accumulateur (10) qui présente une interface (12, 13) pour la communication avec une machine-outil portable (1) et pour l'alimentation de la machine-outil portable, des données caractéristiques de la machine-outil portable et/ou des données sur un déroulement de fonctionnement de la machine-outil portable étant reçues par l'interface, **caractérisé en ce que** des données caractéristiques sur une durée maximale autorisée, pour laquelle une tension limite de l'accumulateur et/ou la tension limite de cellules individuelles de l'accumulateur ne doit être pas être atteinte, sont reçues par l'interface et si une protection de décharge totale (15) de l'accumulateur détermine que la tension limite n'est pas atteinte au-delà de la durée maximale autorisée, un signal d'avertissement est émis par l'interface (13) et/ou une alimentation électrique par l'interface (12) est interrompue du côté de l'accumulateur (10).

2. Procédé de commande selon la revendication 1, **caractérisé en ce que** les données caractéristiques comprennent un profil de charge de la machine-outil portable (1).

3. Procédé de commande pour une machine-outil portable (1) qui présente une interface (9) pour la communication avec un accumulateur (10) et pour l'alimentation à partir de l'accumulateur, des données caractéristiques de la machine-outil portable et/ou des données sur un déroulement de fonctionnement de la machine-outil portable étant émises par l'interface, **caractérisé en ce que** des données caractéristiques sur une durée maximale autorisée, pour laquelle une tension limite de l'accumulateur ne doit pas être atteinte, sont émises par l'interface et si un signal d'avertissement (17) d'une protection de décharge totale (15)est reçu par l'interface (9), indiquant que la tension limite n'est pas atteinte au-delà de la durée maximale autorisée, alors un moteur (4) de la machine-outil portable (1) est éteint.

4. Procédé de commande selon la revendication 3, **caractérisé en ce que** les données caractéristiques sont lues à partir d'une mémoire permanente (20) de la machine-outil portable (1).

5. Procédé de commande selon les revendications 3 et 4, **caractérisé en ce que** les données caractéristiques sont émises si un commutateur de système (2) de la machine-outil portable (1) n'est pas actionné plus longtemps qu'un intervalle de temps (T1) prescrit.

6. Procédé de commande selon l'une quelconque des revendications 3 à 5, **caractérisé en ce qu'**un moteur (4) de la machine-outil portable (1) est désactivé pendant une transmission des données caractéristiques.

7. Procédé de commande selon l'une quelconque des revendications 3 à 6, **caractérisé en ce que** les données caractéristiques contiennent une consigne pour la tension limite.

8. Procédé de commande selon l'une quelconque des revendications 3 à 7, **caractérisé en ce qu'**un dispositif d'enregistrement (21) de la machine-outil portable (1) consigne un fonctionnement de la machine-outil portable (1) et transmet les données consignées à l'accumulateur (10) pour l'enregistrement dans l'accumulateur (10).

9. Procédé de commande selon la revendication 8, **caractérisé en ce que** les données consignées sont transmises si le commutateur de système (2) n'est pas actionné plus longtemps qu'un intervalle de temps prescrit (T1).

10. Procédé de commande pour un système composé d'une machine-outil portable (1) et d'un accumulateur (10), la machine-outil portable pouvant être reliée par une interface de courant (8) à l'accumulateur pour son alimentation, et la machine-outil portable présentant une interface de données (9) pour la communication avec l'accumulateur, des données caractéristiques de la machine-outil portable étant transmises à l'accumulateur et/ou des données sur un déroulement de fonctionnement de la machine-outil portable, **caractérisé en ce que** des données caractéristiques sur une durée maximale autorisée, pour laquelle une tension limite de l'accumulateur ne doit pas être atteinte, sont émises par l'interface et si un signal d'avertissement (17) d'une protection de décharge totale (15) que la tension limite n'est pas atteinte plus longtemps que la durée maximale autorisée est reçu par l'interface, alors un moteur (4) de la machine-outil portable (1) est éteint.

11. Procédé de commande selon la revendication 10, **caractérisé en ce que** l'accumulateur (10) réalise un procédé de commande selon l'une quelconque des revendications 1 à 3 et la machine-outil portable (1) réalise un procédé de commande selon l'une quelconque des revendications 3 à 9.

12. Accumulateur pour une machine-outil portable qui présente une interface pour la communication avec la machine-outil portable (1) et pour l'alimentation de la machine-outil portable, **caractérisé par** une protection de décharge totale (15) pour la surveillance d'une décharge totale en réponse aux données caractéristiques transmises par la machine-outil portable (1) et/ou une mémoire de données (18) pour l'enregistrement de données sur un déroulement de fonctionnement de la machine-outil portable qui sont transmises par la machine-outil portable, **caractérisé en ce que** des données caractéristiques sur une durée maximale autorisée, pour laquelle une tension limite de l'accumulateur ne doit pas être atteinte, sont émises par l'interface et si un signal d'avertissement (17) d'une protection de décharge totale (15) que la tension limite n'est pas atteinte plus longtemps que la durée maximale autorisée est reçu par l'interface, alors un moteur (4) de la machine-outil portable (1) est éteint.

13. Système composé d'une machine-outil portable et d'un accumulateur, **caractérisé par** une interface pour la communication avec la machine-outil portable (1) et pour l'alimentation de la machine-outil portable par l'accumulateur (10), aménagé pour la réalisation de l'un des procédés selon les revendications 10 ou 11.
